# EUROPEAN PATENT APPLICATION

(11) **EP 3 992 022 A1**
(43) Date of publication of application: **04.05.2022**
(21) Application number: 21205040.5
(22) Date of filing: 27.10.2021
(51) Int. Cl.: B60L 53/60

(54) **VEHICLE AND CHARGER**

(30) Priority: 29.10.2020 JP 2020181222
(71) Applicant: TOYOTA JIDOSHA KABUSHIKI KAISHA, Toyota-shi, Aichi-ken 471-8571 (JP)
(72) Inventor: MISAWA, Takahiro, Toyota-shi, 471-8571 (JP)
(74) Representative: D Young & Co LLP

(57) **Abstract**

A vehicle-side temperature sensor (107) obtains a vehicle-side temperature, which is a temperature of an inlet (102). When charging or discharging power of a battery (101) is equal to or more than prescribed power, a vehicle-side controller (111) requests a charger (200) to perform thermal management, on the condition that the vehicle-side temperature is equal to or higher than a first temperature. In contrast, when the charging or discharging power is less than the prescribed power, the vehicle-side controller (111) requests the charger (200) to perform the thermal management, on the condition that the vehicle-side temperature is equal to or higher than a second temperature that is higher than the first temperature.

## Description

This nonprovisional application is based on Japanese Patent Application No. 2020-181222 filed on October 29, 2020 with the Japan Patent Office, the entire contents of which are hereby incorporated by reference.

### BACKGROUND

### Field

The present disclosure relates to the technique for connecting a power storage device mounted on a vehicle to a power supply external to the vehicle, and charging or discharging the power storage device.

### Description of the Background Art

There is known a configuration of a vehicle having a power storage device mounted thereon, in which the power storage device can be charged when a power supply external to the vehicle is connected to a connection unit of the vehicle. When the power storage device is charged as described above, the connection unit of the vehicle may generate heat. When a temperature of the connection unit exceeds a heat resistance temperature due to such heat generation in the connection unit, the connection unit may deteriorate.

Japanese Patent Laying-Open No. 2013-198372 describes that a sensor detects a temperature of a connection unit between a power supply external to a vehicle and the vehicle when a power storage device of the vehicle is charged. Japanese Patent Laying-Open No. 2013-198372 discloses that when the sensor detects an increase in temperature, electric power supplied to the power storage device is reduced, thereby managing the temperature of the connection unit (thermal management) and protecting the connection unit.

In Japanese Patent Laying-Open No. 2013-198372 described above, the thermal management is performed based on the temperature of the connection unit. However, the connection unit generates less heat when the charging power is small than when the charging power is large, and thus, the temperature of the connection unit increases relatively gently. Therefore, even when the temperature of the connection unit increases to some degree, immediate thermal management is in some cases unnecessary, if the charging power is small. When the thermal management is performed based on the temperature of the connection unit as described in Japanese Patent Laying-Open No. 2013-198372, the thermal management may be performed excessively. The same problem also occurs in a charger-side connection unit to which the vehicle performing charging is connected.

### SUMMARY

The present disclosure has been made to solve the above-described problem, and an object of the present disclosure is to prevent thermal management from being performed excessively, while protecting a connection unit of a vehicle or a connection unit of a charger, at the time of charging or discharging of a power storage device of the vehicle.

A vehicle according to an aspect of the present disclosure includes: a power storage device; and a connection unit that is connected to a charger to enable at least one of charging and discharging of the power storage device. The connection unit is affected by thermal management performed by a thermal management function of the charger, when the connection unit is connected to the charger. The vehicle further includes: a temperature sensor that obtains a temperature of the connection unit; a communicating unit that transmits a request signal through communication with the charger, the request signal being a signal for requesting the charger to perform the thermal management; and a power information obtaining unit that obtains information about power of charging or discharging of the power storage device. When the information about the power indicates that the power is equal to or more than prescribed power, the communicating unit transmits the request signal, on the condition that the temperature of the connection unit is equal to or higher than a first temperature. When the information about the power indicates that the power is less than the prescribed power, the communicating unit transmits the request signal, on the condition that the temperature of the connection unit is equal to or higher than a second temperature. The second temperature is higher than the first temperature.

According to the above-described vehicle, the temperature of the connection unit, which is the condition for the vehicle-side communicating unit transmitting the request signal, is higher when the information about the power of charging or discharging of the power storage device indicates that the power is less than the prescribed power, than when the information about the power indicates that the power is equal to or more than the prescribed power, and thus, an opportunity to perform the thermal management decreases. When the information about the power of charging or discharging indicates that the power is less than the prescribed power, the temperature of the connection unit increases gently. Therefore, even if the thermal management is started from a higher temperature than that when the information about the power of charging or discharging indicates that the power is equal to or more than the prescribed power, the connection unit can be protected.

In an embodiment, the request signal includes a current limiting signal for requesting the thermal management performed by limiting a current of charging or discharging of the power storage device.

According to the above-described embodiment, the temperature, which is the condition for the communicating unit requesting the limitation of the current, is higher when the information about the power indicates that the power is less than the prescribed power, than when the information about the power indicates that the power is equal to or more than the prescribed power, and thus, an opportunity to perform the limitation of the current decreases. Therefore, it is possible to prevent the charging time or the discharging time from becoming longer, while protecting the connection unit.

In an embodiment, the charger includes a cooling device, and the request signal includes a cooling signal for requesting the thermal management performed by causing the cooling device to operate.

According to the above-described embodiment, the temperature, which is the condition for the communicating unit requesting the operation of the cooling device, is higher when the information about the power indicates that the power is less than the prescribed power, than when the information about the power indicates that the power is equal to or more than the prescribed power, and thus, an opportunity to perform the operation of the cooling device decreases. Therefore, it is possible to prevent the power from being consumed in the operations other than charging or discharging, while protecting the connection unit.

In an embodiment, the vehicle further includes an efficiency setting information obtaining unit that obtains efficiency setting information at the time of at least one of charging and discharging of the power storage device, the efficiency setting information being information about whether or not to take measures to prevent efficiency reduction. The request signal includes at least one of a current limiting signal and a cooling signal, the current limiting signal being a signal for requesting the thermal management performed by limiting a current of charging or discharging of the power storage device, the cooling signal being a signal for requesting the thermal management performed by causing a cooling device of the charger to operate. When the efficiency setting information indicates that measures are taken to prevent efficiency reduction, the request signal does not include the cooling signal. When the efficiency setting information indicates that measures are not taken to prevent efficiency reduction, the request signal includes the cooling signal.

According to the above-described embodiment, when the vehicle is set to take measures to prevent a reduction in efficiency of charging or discharging, the request signal does not include the cooling signal and includes the current limiting signal. Therefore, even when the thermal management is performed, the cooling device does not operate and the limitation of the current is performed. Thus, it is possible to prevent the power from being consumed in the operations other than charging or discharging, while protecting the connection unit.

In an embodiment, the vehicle further includes a time setting information obtaining unit that obtains time setting information at the time of at least one of charging and discharging of the power storage device, the time setting information being information about whether or not to take measures to shorten charging time or discharging time. The request signal includes at least one of a current limiting signal and a cooling signal, the current limiting signal being a signal for requesting the thermal management performed by limiting a current of charging or discharging of the power storage device, the cooling signal being a signal for requesting the thermal management performed by causing a cooling device of the charger to operate. When the time setting information indicates that measures are taken to shorten the charging time or the discharging time, the request signal does not include the current limiting signal. When the time setting information indicates that measures are not taken to shorten the charging time or the discharging time, the request signal includes the current limiting signal.

According to the above-described embodiment, when the vehicle is set to take measures to shorten the charging time or the discharging time, the request signal does not include the current limiting signal and includes the cooling signal. Therefore, even when the thermal management is performed, the limitation of the current is not performed and the cooling device operates. Thus, it is possible to prevent the charging time or the discharging time from becoming longer, while protecting the connection unit.

A vehicle according to another aspect of the present disclosure includes: a power storage device; a connection unit that is connected to a charger to enable at least one of charging and discharging of the power storage device; a thermal management device that performs thermal management of the connection unit; a temperature sensor that obtains a temperature of the connection unit; and a power information obtaining unit that obtains information about power of charging or discharging of the power storage device. When the information about the power indicates that the power is equal to or more than prescribed power, the thermal management device performs the thermal management, on the condition that the temperature of the connection unit is equal to or higher than a first temperature. When the information about the power indicates that the power is less than the prescribed power, the thermal management device performs the thermal management, on the condition that the temperature of the connection unit is equal to or higher than a second temperature. The second temperature is higher than the first temperature.

According to the above-described vehicle, the temperature of the connection unit, which is the condition for the thermal management device performing the thermal management, is higher when the information about the power of charging or discharging of the power storage device indicates that the power is less than the prescribed power, than when the information about the power indicates that the power is equal to or more than the prescribed power, and thus, an opportunity to perform the thermal management decreases. When the information about the power of charging or discharging indicates that the power is less than the prescribed power, the temperature increases gently. Therefore, even if the thermal management is started from a higher temperature than that when the information about the power of charging or discharging indicates that the power is equal to or more than the prescribed power, the connection unit can be protected.

A charger according to an aspect of the present disclosure includes: a charger-side connection unit that is connected to a vehicle-side connection unit of a vehicle including a power storage device to enable at least one of charging and discharging of the power storage device; a thermal management device that performs thermal management of the charger-side connection unit; a communicating unit that communicates with the vehicle to obtain information about power of charging or discharging of the power storage device; and a temperature obtaining unit that obtains at least one of a charger-side temperature and a vehicle-side temperature, the charger-side temperature being a temperature of the charger-side connection unit, the vehicle-side temperature being a temperature of the vehicle-side connection unit. When the information about the power indicates that the power is equal to or more than prescribed power, the thermal management device performs the thermal management, on the condition that at least one of the charger-side temperature and the vehicle-side temperature is equal to or higher than a first temperature. When the information about the power indicates that the power is less than the prescribed power, the thermal management device performs the thermal management, on the condition that at least one of the charger-side temperature and the vehicle-side temperature is equal to or higher than a second temperature. The second temperature is higher than the first temperature.

According to the above-described charger, the temperature of the vehicle-side connection unit or the charger-side connection unit, which is the condition for the thermal management device performing the thermal management, is higher when the information about the power of charging or discharging of the power storage device indicates that the power is less than the prescribed power, than when the information about the power indicates that the power is equal to or more than the prescribed power, and thus, an opportunity to perform the thermal management decreases. When the information about the power of charging or discharging indicates that the power is less than the prescribed power, the temperature increases gently. Therefore, even if the thermal management is started from a higher temperature than that when the information about the power of charging or discharging indicates that the power is equal to or more than the prescribed power, the connection unit can be protected.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 shows a vehicle and a charger.
Fig. 2 shows configurations of the vehicle and the charger in a first embodiment.
Fig. 3 shows a flowchart of temperature control in the first embodiment.
Fig. 4 shows a flowchart of setting of a thermal management method.
Fig. 5 shows configurations of a vehicle and a charger in a second embodiment.
Fig. 6 shows a flowchart of temperature control in the second embodiment.
Fig. 7 shows configurations of a charger and a vehicle in a third embodiment.
Fig. 8 shows a flowchart of temperature control in the third embodiment.

### DESCRIPTION OF THE PREFERRED EMBODIMENTS

Embodiments of the present disclosure will be described in detail hereinafter with reference to the drawings, in which the same or corresponding portions are denoted by the same reference characters and description thereof will not be repeated.

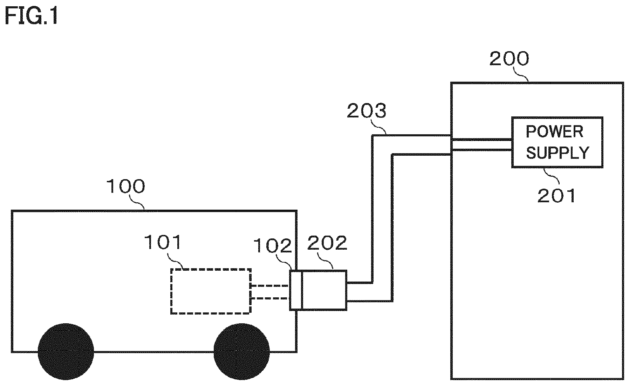

Fig. 1 shows a vehicle 100 and a charger 200 according to an embodiment of the present disclosure. Vehicle 100 is a battery electric vehicle that includes a battery 101 and travels by driving a driving device such as a motor using electric power obtained from battery 101.

Vehicle 100 is provided with an inlet 102, and inlet 102 is connected to battery 101 through a not-shown switch. By connecting, to inlet 102, a connector 202 that is provided at a cable 203 extending from charger 200, at least one of charging and discharging (hereinafter, referred to as "charging or discharging") of battery 101 can be performed. During charging, electric power supplied from a power supply 201 connected to charger 200 is supplied to battery 101 of vehicle 100. During discharging, electric power is supplied from battery 101 to power supply 201. Vehicle 100 is not limited to a battery electric vehicle as long as it is a vehicle in which battery 101 can be charged or discharged by charger 200, and vehicle 100 may be a plug-in hybrid electric vehicle or the like.

Power supply 201 may be a system power supply provided from an electric power company, or may be a power storage device provided in charger 200.

### <First Embodiment

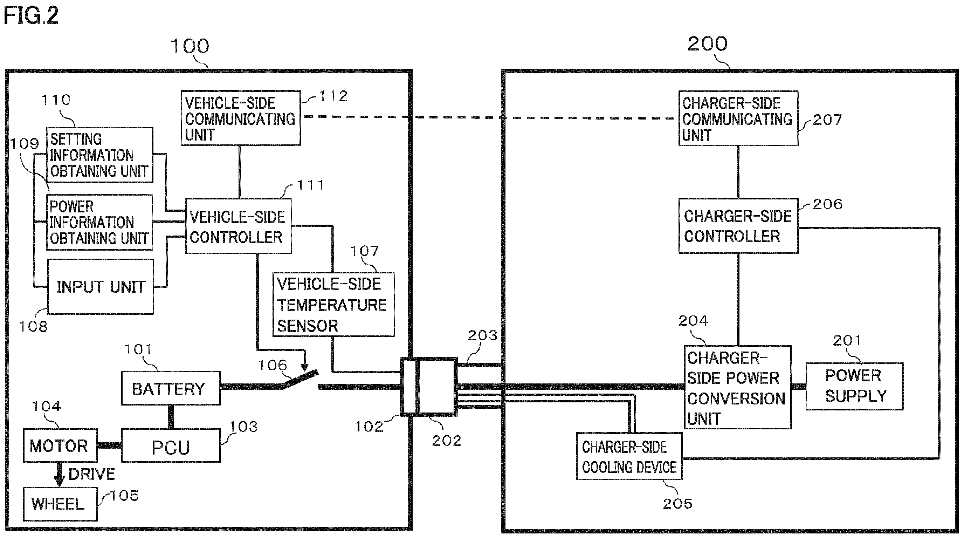

Fig. 2 is a block diagram showing a charging/discharging system according to a first embodiment. Vehicle 100 includes a wheel 105 and a motor 104 that drives wheel 105. A power control unit (PCU) 103 is connected to motor 104. PCU 103 is a power conversion unit that converts DC power supplied from battery 101 into three-phase AC power and provides the three-phase AC power to motor 104. By connecting battery 101 to charger 200 external to vehicle 100 through inlet 102, battery 101 can be charged or discharged.

A switch 106 is provided between battery 101 and inlet 102. When switch 106 is closed, battery 101 and inlet 102 are electrically connected to each other.

Inlet 102 of vehicle 100 is provided with a vehicle-side temperature sensor 107 that can monitor an inlet temperature, which is a temperature of inlet 102.

An input unit 108 is a device that receives an operation by a user. Input unit 108 is connected to a vehicle-side controller 111 and outputs, to vehicle-side controller 111, signals indicating that the user has performed a charging or discharging start operation and a charging or discharging stop operation. Input unit 108 is also connected to a power information obtaining unit 109 and outputs, to power information obtaining unit 109, a value input as a user set power value described below. Input unit 108 is further connected to a setting information obtaining unit 110 and outputs, to setting information obtaining unit 110, a value input as charging or discharging setting information described below. A touch panel, a keyboard, a microphone that receives voice inputs, or the like is used as input unit 108.

Power information obtaining unit 109 obtains power information, which is information about power at the time of charging or discharging. The user set power value that is charging or discharging power desired by the user, a battery set power value that is charging or discharging power permitted in battery 101, a charger set power value that is charging or discharging power permitted in charger 200, or the like is used as the power information. The battery set power value and the charger set power value are determined in accordance with a type, a temperature and the like of battery 101 and charger 200. The charging or discharging power may be set as a target value of the power at the time of charging or discharging, or may be set as an upper limit value of the power.

Setting information obtaining unit 110 obtains charging or discharging setting information, which is information about at least one of efficiency setting information indicating whether or not the user of vehicle 100 takes measures to prevent a reduction in efficiency of charging or discharging, and time setting information indicating whether or not the user of vehicle 100 takes measures to shorten the charging time or the discharging time. When the user of vehicle 100 takes measures to prevent a reduction in efficiency, the power consumed in the operations other than charging or discharging of battery 101 during charging or discharging is restricted. When the user of vehicle 100 takes measures to shorten the charging time or the discharging time, restriction of the charging or discharging power of battery 101 during charging or discharging is prevented.

Based on the inlet temperature, the power information, the charging or discharging setting information or the like described above, vehicle-side controller 111 determines whether or not thermal management of inlet 102 is required, in accordance with a control flow described below. The thermal management refers to controlling the temperatures of inlet 102 and connector 202 in order to prevent the temperatures of inlet 102 and connector 202 from exceeding a heat resistance temperature due to heat generated during charging or discharging. A specific method for the thermal management will be described below. Vehicle-side controller 111 determines whether or not the thermal management is required, based on the power information, thereby preventing the thermal management from being performed excessively, while protecting inlet 102 and connector 202. In addition, vehicle-side controller 111 controls opening and closing of switch 106 based on the charging or discharging start operation and the charging or discharging stop operation performed through input unit 108.

A vehicle-side communicating unit 112 communicates with charger 200 to receive and transmit information and signals from/to charger 200. Vehicle-side communicating unit 112 can receive information about the charger set power value of charger 200 from charger 200. When vehicle-side controller 111 determines that the thermal management of inlet 102 is required, vehicle-side communicating unit 112 transmits a request signal, which is a signal for requesting charger 200 to perform the thermal management. A wireless communication method, a wired communication method in which a communication line for CAN communication or the like is provided in a cable 203, a PLC communication method using a power line for charging or discharging can, for example, be used as a communication method.

Power supply 201 is connected to charger 200, and a charger-side power conversion unit 204 is connected to power supply 201. In the present embodiment, power supply 201 is implemented by an AC power supply. Charger-side power conversion unit 204 is connected to inlet 102 of vehicle 100 through cable 203 and connector 202.

Charger-side power conversion unit 204 is implemented by a bidirectional power conversion unit, and is formed by, for example, a circuit including a DC/DC converter and an AC/DC converter connected in series. Each of the DC/DC converter and the AC/DC converter is implemented by a circuit including a switching element, such as an MOSFET, an IGBT or a bipolar transistor, and can adjust an output current by controlling on and off of the switching element.

Charger 200 includes a charger-side cooling device 205. A liquid cooling-type device using cooling water is, for example, used as charger-side cooling device 205. When the liquid cooling-type device is used, a flow path of the cooling water is provided in cable 203 and connector 202, and a water pump and a radiation fin are provided in charger-side cooling device 205. Charger-side cooling device 205 drives the water pump to circulate the cooling water in the flow path, such that the cooling water receives heat from cable 203 and connector 202 and flows into charger-side cooling device 205. Charger-side cooling device 205 exchanges the heat received by the cooling water from cable 203 and connector 202 with an environmental temperature through the radiation fin. As a result, cable 203 and connector 202 can be cooled. At the same time, inlet 102 connected to connector 202 is cooled.

A charger-side controller 206 controls power conversion performed in charger-side power conversion unit 204. Charger-side controller 206 can adjust a charging or discharging current by controlling on and off of the switching element of each of the DC/DC converter and the AC/DC converter that form charger-side power conversion unit 204. Charger-side controller 206 can also stop charging or discharging by stopping the operation of the DC/DC converter and the AC/DC converter. Furthermore, charger-side controller 206 controls the start and the stop of the operation of charger-side cooling device 205.

Charger-side controller 206 performs the thermal management of inlet 102 and connector 202 by controlling charger-side power conversion unit 204 and charger-side cooling device 205 as described above. That is, charger-side controller 206 controls charger-side power conversion unit 204 to limit the charging or discharging current, thereby suppressing heat generation in inlet 102 and connector 202. In addition, charger-side controller 206 causes charger-side cooling device 205 to operate, thereby cooling inlet 102 and connector 202. Charger-side controller 206 may perform both limitation of the charging or discharging current and cooling by charger-side cooling device 205.

A charger-side communicating unit 207 communicates with vehicle-side communicating unit 112 to receive and transmit information and signals from/to vehicle 100. Charger-side communicating unit 207 receives the request signal transmitted from vehicle-side communicating unit 112. Charger-side communicating unit 207 also transmits information about the charger set power value. Based on the request signal, charger-side controller 206 controls charger-side cooling device 205 and charger-side power conversion unit 204.

Each of power information obtaining unit 109, setting information obtaining unit 110, vehicle-side controller 111, and charger-side controller 206 is formed by a central processing unit (CPU), a memory (a read only memory (ROM) or a random access memory (RAM)) and the like, and the CPU performs processing based on a program recorded in the ROM.

A power line extending from power supply 201 to motor 104 through switch 106 is indicated by a thick line, the flow path of the cooling water is indicated by a double line, communication connection between vehicle-side communicating unit 112 and charger-side communicating unit 207 is indicated by a broken line, and the other signal lines are indicated by thin lines.

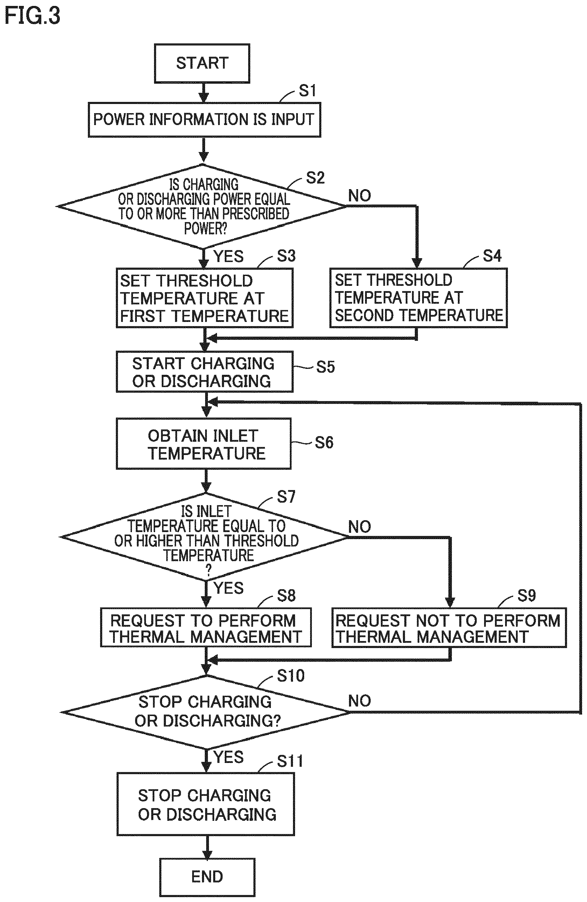

Fig. 3 is a flowchart showing a procedure of temperature control in charging or discharging performed in vehicle-side controller 111.

The flow of this control is started when the user performs the charging or discharging start operation through input unit 108.

First, the power information obtained by power information obtaining unit 109 is input to vehicle-side controller 111 (S1). When the user set power value is used as the power information, the power value input to input unit 108 is obtained. When the battery set power value is used as the power information, the battery set power value is obtained from a not-shown control device of battery 101 or the like. When the charger set power value is used as the power information, vehicle-side controller 111 requests the information about the charging or discharging power to charger 200 through vehicle-side communicating unit 112, and obtains the charger set power value transmitted by charger-side communicating unit 207 in response thereto.

Next, vehicle-side controller 111 determines whether or not the power information indicates that the power is equal to or more than prescribed power (S2). When the power information includes at least two of the user set power value, the battery set power value and the charger set power value described above, vehicle-side controller 111 determines that the power information indicates that the power is equal to or more than the prescribed power, on the condition that a minimum value of the plurality of values is equal to or more than the prescribed power. When the power information is one of the user set power value, the battery set power value and the charger set power value described above, vehicle-side controller 111 determines whether or not one value indicated by the power information is equal to or more than the prescribed power. The prescribed power is set at, for example, approximately 100 kW.

When the power information indicates that the power is equal to or more than the prescribed power, the vehicle-side controller 111 sets a threshold temperature at a first temperature (S3). Otherwise, the vehicle-side controller 111 sets the threshold temperature at a second temperature (S4). The first temperature is lower than the second temperature. For example, in the case of a vehicle that can be charged or discharged at a maximum of 150 kW, the first temperature is set at 10°C and the second temperature is set at 60°C.

The first temperature of 10°C is a temperature that makes it possible to prevent the temperature of inlet 102 from exceeding a heat resistance temperature by starting the thermal management, when the charging or discharging power is 150 kW. When the inlet temperature becomes equal to or higher than 10°C, the temperature of inlet 102 is highly likely to reach the heat resistance temperature even when the thermal management is performed. Therefore, when there is a possibility that charging or discharging may be performed at 150 kW, the threshold temperature for the thermal management is set at 10°C.

In contrast, when the charging or discharging power is 100 kW, the temperature of inlet 102 increases more gently than when charging or discharging is performed at 150 kW. Therefore, the temperature of inlet 102 is considered to be less likely to exceed the heat resistance temperature even when the thermal management is started after the inlet temperature exceeds 10°C. Thus, even when the threshold temperature is set at a temperature higher than 10°C to decrease an opportunity to perform the thermal management, inlet 102 can be protected. The second temperature of 60°C is a temperature that makes it possible to prevent the temperature of inlet 102 from exceeding the heat resistance temperature by starting the thermal management, when the charging or discharging power is 100 kW.

After setting the threshold temperature, vehicle-side controller 111 controls switch 106 to a closed state and requests the start of charging or discharging to charger 200 through vehicle-side communicating unit 112. As a result, charger-side controller 206 causes charger-side power conversion unit 204 to operate, and charging or discharging is started (S5).

After charging or discharging is started, vehicle-side controller 111 obtains the inlet temperature of inlet 102 through vehicle-side temperature sensor 107 (S6). Next, vehicle-side controller 111 compares the obtained inlet temperature with the threshold temperature (S7). When the inlet temperature is equal to or higher than the threshold temperature, vehicle-side controller 111 transmits, through vehicle-side communicating unit 112, the request signal for requesting charger 200 to perform the thermal management (S8).

When receiving the request signal through charger-side communicating unit 207, charger-side controller 206 performs the thermal management. The thermal management includes at least one of the above-described limitation of the charging or discharging current by controlling charger-side power conversion unit 204 to reduce the charging or discharging current by a certain amount, and the above-described cooling by charger-side cooling device 205.

When the inlet temperature is lower than the threshold temperature in S7, vehicle-side controller 111 transmits, through vehicle-side communicating unit 112, a thermal management non-performance request signal for requesting charger 200 not to perform the thermal management (S9). When receiving the thermal management non-performance request signal through charger-side communicating unit 207, charger-side controller 206 maintains a non-performance state in the case where the thermal management is not performed, and stops the thermal management in the case where the thermal management is already performed.

Next, vehicle-side controller 111 determines whether or not to stop charging or discharging (S10). Vehicle-side controller 111 determines to stop charging or discharging, when the user has performed the charging or discharging stop operation through input unit 108.

When determining to stop charging or discharging, vehicle-side controller 111 controls switch 106 to an open state and requests charger 200 to stop charging or discharging through vehicle-side communicating unit 112. When charger-side communicating unit 207 receives the request for stopping charging or discharging, charger-side controller 206 stops the operation of charger-side power conversion unit 204, thereby stopping charging or discharging (S11). When charging or discharging stops, the flow of this control ends. When determining not to stop charging or discharging, vehicle-side controller 111 returns the process to S7 and again obtains the inlet temperature.

Vehicle-side controller 111 may only request to perform the thermal management, without specifying how charger 200 performs the thermal management, or may specify whether to perform the control of charger-side cooling device 205 or to perform the control of charger-side power conversion unit 204 as the thermal management, and request the specified control.

The charging or discharging time is longer when the control of charger-side power conversion unit 204 is performed as the thermal management, i.e., when the limitation of the charging power is performed, than when the thermal management is not performed. In contrast, when the control of charger-side cooling device 205 is performed as the thermal management, the power for operating charger-side cooling device 205 is required in addition to the charging or discharging power, which leads to a reduction in efficiency of the power consumed in charging or discharging. Thus, by obtaining a user demand about charging or discharging, a thermal management method that satisfies the user demand can be selected.

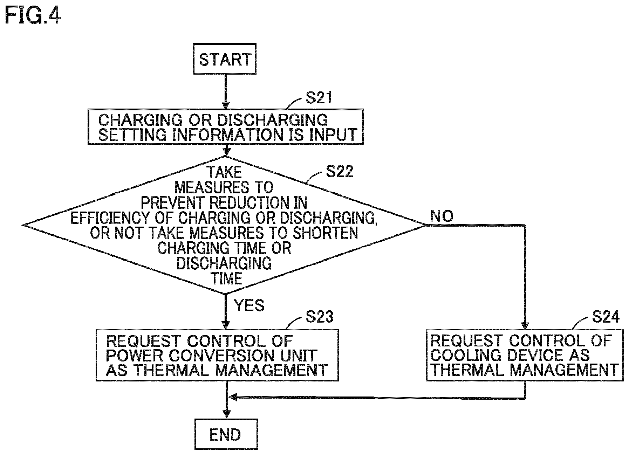

Fig. 4 shows a flowchart of setting of the thermal management method performed when vehicle-side controller 111 specifies and requests the thermal management method.

The charging or discharging setting information obtained by setting information obtaining unit 110 is input to vehicle-side controller 111 (S21). The charging or discharging setting information may be preset in the vehicle by the user, or may be set every time the charging or discharging start operation is performed.

Next, based on the charging or discharging setting information, vehicle-side controller 111 determines whether the user takes measures to prevent a reduction in efficiency of charging or discharging or the user takes measures to shorten the charging time or the discharging time (S22). Based on the determination result, vehicle-side controller 111 transmits a current limiting signal or a cooling signal as the request signal.

When charger-side communicating unit 207 receives the current limiting signal, charger-side controller 206 controls charger-side power conversion unit 204 to limit the charging or discharging current.

When charger-side communicating unit 207 receives the cooling signal, charger-side controller 206 causes charger-side cooling device 205 to operate.

When determining that the user takes measures to prevent a reduction in efficiency of charging or discharging, or the user does not take measures to shorten the charging time or the discharging time, vehicle-side controller 111 causes vehicle-side communicating unit 112 to transmit the current limiting signal for requesting the control of charger-side power conversion unit 204 as the thermal management (S23). As a result, charger-side cooling device 205 does not operate at the time of the thermal management, and thus, the power is not consumed in the operations other than charging or discharging of battery 101, and a reduction in efficiency of charging or discharging can be prevented.

In contrast, when determining that the user does not take measures to prevent a reduction in efficiency of charging or discharging, or the user takes measures to shorten the charging time or the discharging time, vehicle-side controller 111 causes vehicle-side communicating unit 112 to transmit the cooling signal for requesting the control of charger-side cooling device 205 as the thermal management (S24). As a result, the charging or discharging current is not limited at the time of the thermal management, and thus, it is possible to prevent the charging time or the discharging time from becoming longer. After S23 or S24, the setting of the thermal management method ends.

Thus, when the user desires to prevent a reduction in efficiency of charging or discharging, or when the user does not desire to shorten the charging time or the discharging time, the control of charger-side power conversion unit 204 is performed. When the user desires to shorten the charging time or the discharging time, or when the user does not desire to prevent a reduction in efficiency of charging or discharging, the control of charger-side cooling device 205 is preferentially performed. Therefore, charging or discharging can be performed to satisfy the user demand.

### <Second Embodiment>

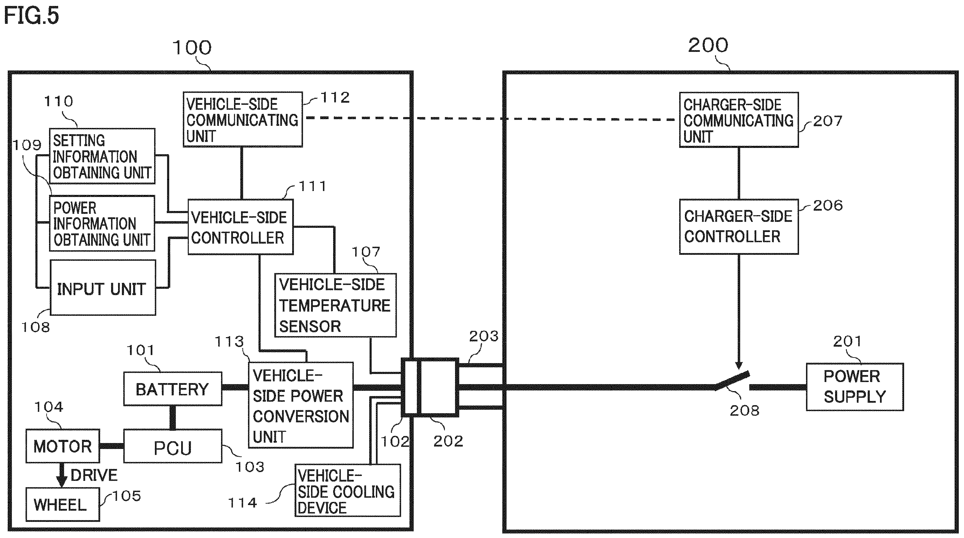

Fig. 5 is a block diagram showing a charging/discharging system according to a second embodiment. Unlike the first embodiment, in the present embodiment, vehicle 100 is provided with a vehicle-side cooling device 114 and is provided with a vehicle-side power conversion unit 113 instead of switch 106. Charger 200 is not provided with charger-side cooling device 205 and is provided with a switch 208 instead of charger-side power conversion unit 204.

Similarly to charger-side cooling device 205, a liquid cooling-type device that circulates cooling water in a flow path and exchanges heat received from inlet 102 with an environmental temperature through a radiation fin or the like is, for example, used as vehicle-side cooling device 114.

Similarly to charger-side power conversion unit 204, vehicle-side power conversion unit 113 is formed by an AC/DC converter and a DC/DC converter, and adjusts a charging current supplied from charger 200 through inlet 102 and a discharging current of battery 101 supplied from inlet 102 to charger 200. Vehicle-side power conversion unit 113 is controlled by vehicle-side controller 111.

Switch 208 of charger 200 is provided between cable 203 and power supply 201, and when switch 208 is closed, cable 203 and power supply 201 are electrically connected to each other. Opening and closing of switch 208 is controlled by charger-side controller 206.

Since the remaining configuration is the same as that of Fig. 2, description will not be repeated.

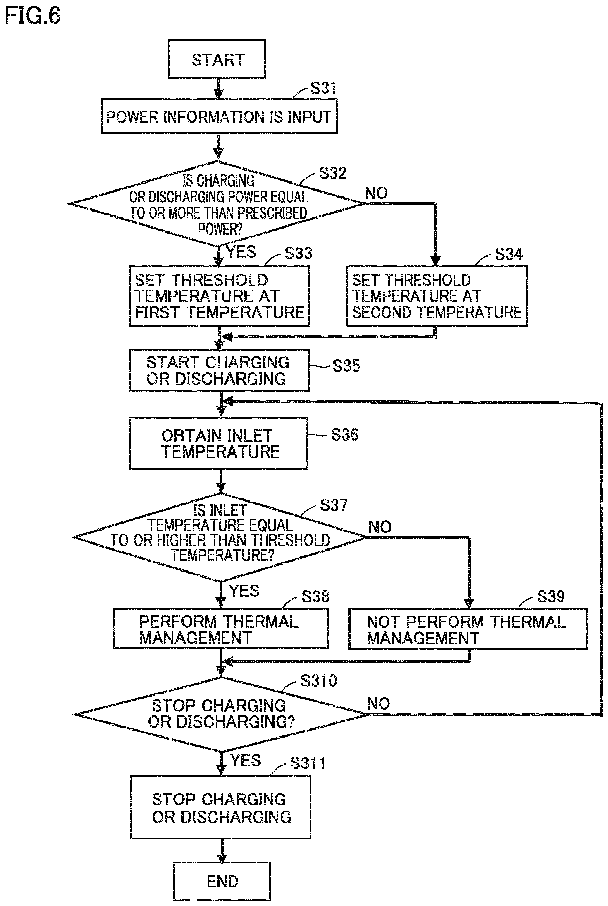

Temperature control performed by vehicle-side controller 111 in the second embodiment will be described with reference to Fig. 6. S31 to S34, S36, S37, and S310 in Fig. 6 are common to S1 to S4, S5, S6, and S10 of the control in the first embodiment shown in Fig. 3.

In S35, at the start of charging or discharging, vehicle-side controller 111 starts the operation of vehicle-side power conversion unit 113 and requests charger 200 to start charging or discharging through vehicle-side communicating unit 112. When charger-side communicating unit 207 receives the request to start charging or discharging, charger-side controller 206 brings switch 208 into a closed state, and charging or discharging is started.

When the inlet temperature is equal to or higher than the threshold temperature in S37, vehicle-side controller 111 causes at least one of vehicle-side cooling device 114 and vehicle-side power conversion unit 113 to perform the thermal management (S38). As a result, cooling of inlet 102 by vehicle-side cooling device 114 or limitation of the charging or discharging current by the vehicle-side power conversion unit 113 is performed, thereby suppressing an increase in temperature of inlet 102. When the inlet temperature is lower than the threshold temperature in S37, vehicle-side controller 111 controls vehicle-side cooling device 114 or vehicle-side power conversion unit 113 not to perform the thermal management (S39).

In S310, vehicle-side controller 111 stops the operation of vehicle-side power conversion unit 113 and requests charger 200 to stop charging or discharging through vehicle-side communicating unit 112. When charger-side communicating unit 207 receives the request to stop charging or discharging, charger-side controller 206 brings switch 208 into an open state, and charging or discharging stops.

In the present embodiment, vehicle 100 includes the configuration for performing the thermal management, such as vehicle-side power conversion unit 113 and vehicle-side cooling device 114. Therefore, even when charger 200 does not have the thermal management function, inlet 102 can be protected.

### <Third Embodiment

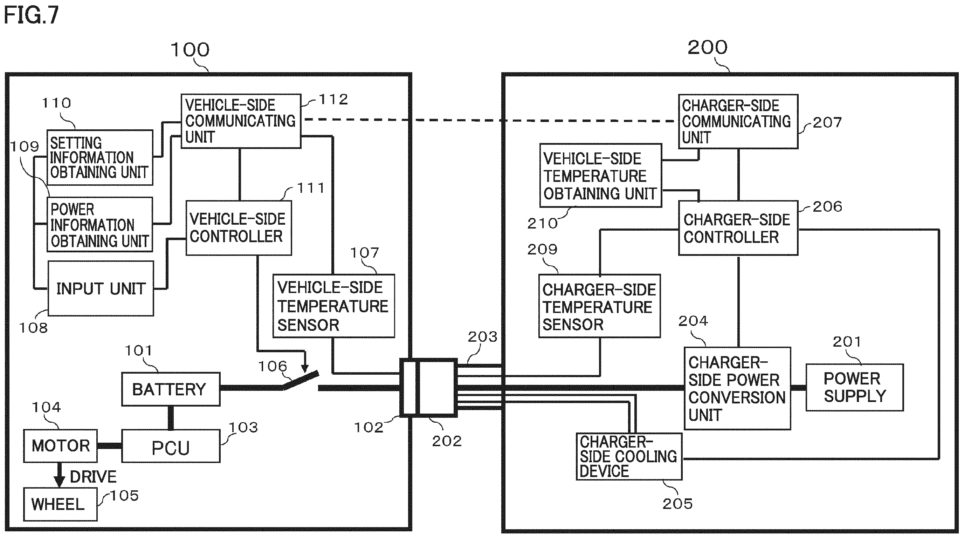

Fig. 7 is a block diagram showing a charging/discharging system according to a third embodiment. Unlike the first embodiment, in the present embodiment, vehicle-side temperature sensor 107, power information obtaining unit 109 and setting information obtaining unit 110 are not connected to vehicle-side controller 111 but connected to vehicle-side communicating unit 112.

Charger 200 is provided with a charger-side temperature sensor 209. Charger-side temperature sensor 209 monitors a charger-side temperature, which is a temperature of at least one of connector 202 and cable 203.

Charger 200 is also provided with a vehicle-side temperature obtaining unit 210. Vehicle-side temperature obtaining unit 210 requests the inlet temperature to vehicle 100 through charger-side communicating unit 207. When vehicle-side communicating unit 112 receives the request for the inlet temperature, the inlet temperature obtained by vehicle-side temperature sensor 107 is transmitted to charger 200 by vehicle-side communicating unit 112, and vehicle-side temperature obtaining unit 210 obtains the inlet temperature.

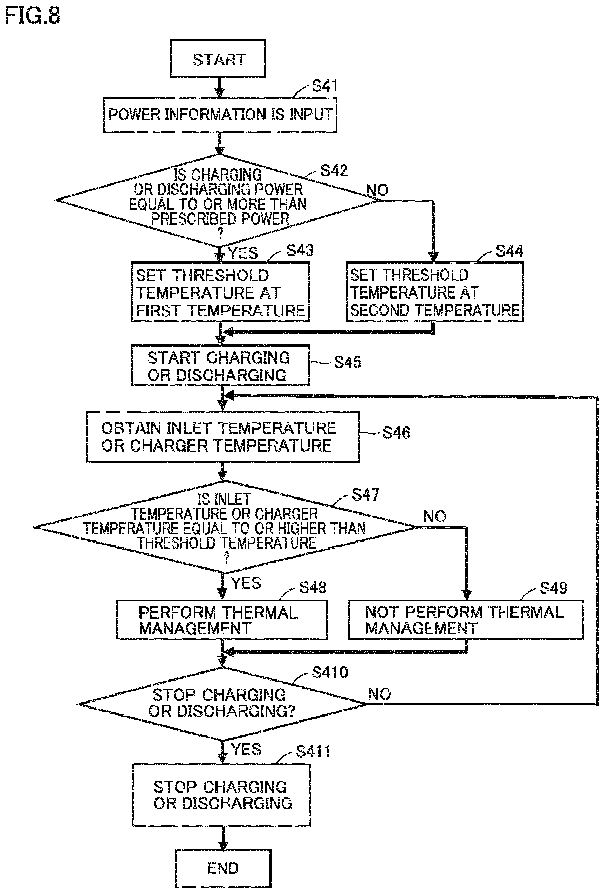

In the third embodiment, charger-side controller 206 performs temperature control of charging or discharging. A control flow performed by charger-side controller 206 will be described with reference to Fig. 8.

When charger-side communicating unit 207 receives the signal indicating that the user has performed the charging or discharging start operation through input unit 108, charger-side controller 206 starts this control.

Next, the power information obtained by power information obtaining unit 109 is input to charger-side controller 206 through vehicle-side communicating unit 112 and charger-side communicating unit 207 (S41). Then, based on the power information, charger-side controller 206 determines whether or not the charging or discharging power is equal to or more than the prescribed power (S42).

When the charging or discharging power is equal to or more than the prescribed power, charger-side controller 206 sets the threshold temperature at a first temperature (S43). When the charging or discharging power is less than the prescribed power, charger-side controller 206 sets the threshold temperature at a second temperature higher than the first temperature (S44).

After setting the threshold temperature, charger-side controller 206 causes charger-side power conversion unit 204 to operate and requests vehicle 100 to start charging or discharging through charger-side communicating unit 207. When vehicle-side communicating unit 112 receives the request to start charging or discharging, vehicle-side controller 111 closes switch 106, and charging or discharging is started (S45).

After charging or discharging is started, charger-side controller 206 obtains the charger-side temperature by using charger-side temperature sensor 209 (S46). Charger-side controller 206 may obtain the inlet temperature of inlet 102 by using vehicle-side temperature obtaining unit 210. Next, charger-side controller 206 compares the obtained charger-side temperature or inlet temperature with the threshold temperature (S47). When at least one of the inlet temperature and the charger-side temperature is equal to or higher than the threshold temperature, charger-side controller 206 requests charger-side cooling device 205 or charger-side power conversion unit 204 to perform the thermal management (S48). Since a thermal management method is the same as that of the first embodiment, description will not be repeated.

When the inlet temperature or the charger-side temperature is lower than the threshold temperature in S47, charger-side controller 206 requests charger-side cooling device 205 or charger-side power conversion unit 204 not to perform the thermal management (S49).

Next, charger-side controller 206 determines whether or not to stop charging or discharging (S410). When charger-side communicating unit 207 receives the signal indicating that the user has performed the charging or discharging stop operation through input unit 108, charger-side controller 206 determines to stop charging or discharging.

When determining to stop charging or discharging, charger-side controller 206 stops the operation of charger-side power conversion unit 204. In vehicle 100, switch 208 is opened when the user has performed the charging or discharging stop operation through input unit 108. As a result, charging or discharging stops (S411) and this control ends.

In the present embodiment, charger-side controller 206 controls the thermal management. Therefore, even when vehicle-side controller 111 does not have the function of controlling the thermal management, inlet 102 and connector 202 can be protected.

Although battery 101 in the above-described embodiments corresponds to "power storage device", any power storage device may be used as long as it stores electric power in a chargeable or dischargeable manner, and a capacitor may, for example, be used.

Although vehicle 100 and charger 200 can perform both charging and discharging in the above-described embodiments, vehicle 100 and charger 200 may perform only one of charging and discharging. Although each of charger-side power conversion unit 204 and vehicle-side power conversion unit 113 is implemented by a bidirectional power conversion unit, each of these power conversion units may be implemented by a unidirectional power conversion unit for charging or discharging, when each of these power conversion units perform only one of charging and discharging.

Although inlet 102 and connector 202 correspond to "vehicle-side connection unit" and "charger-side connection unit", respectively, a vehicle-side connector connected to a cable extending from vehicle 100 may be used as the vehicle-side connection unit, and a charger-side inlet to which the vehicle-side connector is connected may be used as the charger-side connection unit. In this case, "vehicle-side temperature" in the claim corresponds to at least one of a temperature of the cable extending from vehicle 100 and a temperature of the vehicle-side connector, and "charger-side temperature" corresponds to a temperature of the charger-side inlet.

Although vehicle-side controller 111 or charger-side controller 206 obtains the user set power value, the battery set power value and the charger set power value as the power information and determines whether or not a minimum power value thereof is equal to or more than the prescribed power in the above-described embodiments (S3), the present disclosure is not limited thereto. Vehicle-side controller 111 or charger-side controller 206 may compare current values.

For example, vehicle-side controller 111 may obtain, as the power information, a current value of a smaller one of a maximum output current of charger-side power conversion unit 204 obtained through charger-side communicating unit 207 and a maximum permissible charging current of battery 101 stored in a storage unit of vehicle-side controller 111. The maximum output current herein refers to a maximum output current that can be output from charger-side power conversion unit 204, and the maximum permissible charging current herein refers to a maximum current value that is permissible in battery 101 during charging of battery 101.

Specifically, in S1, vehicle-side controller 111 obtains the maximum output current of charger-side power conversion unit 204 obtained through charger-side communicating unit 207. In S2, vehicle-side controller 111 compares a current amount (permissible current amount) of a smaller one of the maximum output current of charger-side power conversion unit 204 and the maximum permissible charging current of battery 101 with a prescribed current, instead of the prescribed power. When the permissible current amount is equal to or more than the prescribed current, the control proceeds to S3. When the permissible current amount is less than the prescribed current, the control proceeds to S4.

When electric power is supplied from battery 101 to charger 200, vehicle-side controller 111 obtains a maximum output current indicating a maximum current value that can be output to charger-side power conversion unit 204, and a maximum permissible charging current indicating a maximum current amount that is permitted to be supplied from battery 101. Then, when a current amount (permissible current amount) of a smaller one of the maximum output current and the maximum permissible charging current is equal to or more than a prescribed current amount, the control proceeds to S3. When the permissible current amount is less than the prescribed current amount, the control proceeds to S4.

Although the embodiments of the present disclosure have been described, it should be understood that the embodiments disclosed herein are illustrative and non-restrictive in every respect. The technical scope of the present disclosure is defined by the terms of the claims and is intended to include any modifications within the scope and meaning equivalent to the terms of the claims.

## Claims

1. A vehicle comprising:
a power storage device (101);
a connection unit (102) that is connected to a charger (200) to enable at least one of charging and discharging of the power storage device,
the connection unit being affected by thermal management performed by a thermal management function of the charger, when the connection unit is connected to the charger;
a temperature sensor (107) that obtains a temperature of the connection unit;
a communicating unit (112) that transmits a request signal through communication with the charger, the request signal being a signal for requesting the charger to perform the thermal management; and
a power information obtaining unit (109) that obtains information about power of charging or discharging of the power storage device, wherein
when the information about the power indicates that the power is equal to or more than prescribed power, the communicating unit transmits the request signal, on the condition that the temperature is equal to or higher than a first temperature,
when the information about the power indicates that the power is less than the prescribed power, the communicating unit transmits the request signal, on the condition that the temperature is equal to or higher than a second temperature, and
the second temperature is higher than the first temperature.

2. The vehicle according to claim 1, wherein
the request signal includes a current limiting signal for requesting the thermal management performed by limiting a current of charging or discharging of the power storage device.

3. The vehicle according to claim 1, wherein
the charger includes a cooling device, and
the request signal includes a cooling signal for requesting the thermal management performed by causing the cooling device to operate.

4. The vehicle according to claim 1, further comprising
an efficiency setting information obtaining unit (110) that obtains efficiency setting information at the time of at least one of charging and discharging of the power storage device, the efficiency setting information being information about whether or not to take measures to prevent efficiency reduction, wherein
the request signal includes at least one of a current limiting signal and a cooling signal, the current limiting signal being a signal for requesting the thermal management performed by limiting a current of charging or discharging of the power storage device, the cooling signal being a signal for requesting the thermal management performed by causing a cooling device of the charger to operate,
when the efficiency setting information indicates that measures are taken to prevent efficiency reduction, the request signal does not include the cooling signal, and
when the efficiency setting information indicates that measures are not taken to prevent efficiency reduction, the request signal includes the cooling signal.

5. The vehicle according to claim 1, further comprising
a time setting information obtaining unit (110) that obtains time setting information at the time of at least one of charging and discharging of the power storage device, the time setting information being information about whether or not to take measures to shorten charging time or discharging time, wherein
the request signal includes at least one of a current limiting signal and a cooling signal, the current limiting signal being a signal for requesting the thermal management performed by limiting a current of charging or discharging of the power storage device, the cooling signal being a signal for requesting the thermal management performed by causing a cooling device of the charger to operate,
when the time setting information indicates that measures are taken to shorten the charging time or the discharging time, the request signal does not include the current limiting signal, and
when the time setting information indicates that measures are not taken to shorten the charging time or the discharging time, the request signal includes the current limiting signal.

6. A vehicle comprising:
a power storage device (101);
a connection unit (102) that is connected to a charger (200) to enable at least one of charging and discharging of the power storage device;
a thermal management device (113, 114) that performs thermal management of the connection unit;
a temperature sensor (107) that obtains a temperature of the connection unit; and
a power information obtaining unit (109) that obtains information about power of charging or discharging of the power storage device, wherein
when the information about the power indicates that the power is equal to or more than prescribed power, the thermal management device performs the thermal management, on the condition that the temperature is equal to or higher than a first temperature,
when the information about the power indicates that the power is less than the prescribed power, the thermal management device performs the thermal management, on the condition that the temperature is equal to or higher than a second temperature, and
the second temperature is higher than the first temperature.

7. A charger comprising:
a charger-side connection unit (202) that is connected to a vehicle-side connection unit (102) of a vehicle (100) including a power storage device (101) to enable at least one of charging and discharging of the power storage device;
a thermal management device (204, 205) that performs thermal management of the charger-side connection unit;
a communicating unit (207) that communicates with the vehicle to obtain information about power of charging or discharging of the power storage device; and
a temperature obtaining unit (209, 210) that obtains at least one of a charger-side temperature and a vehicle-side temperature, the charger-side temperature being a temperature of the charger-side connection unit, the vehicle-side temperature being a temperature of the vehicle-side connection unit, wherein
when the information about the power indicates that the power is equal to or more than prescribed power, the thermal management device performs the thermal management, on the condition that at least one of the charger-side temperature and the vehicle-side temperature is equal to or higher than a first temperature,
when the information about the power indicates that the power is less than the prescribed power, the thermal management device performs the thermal management, on the condition that at least one of the charger-side temperature and the vehicle-side temperature is equal to or higher than a second temperature, and
the second temperature is higher than the first temperature.
